**Europäisches Patentamt**

**European Patent Office**

**Office européen des brevets**

(19)

(11) Veröffentlichungsnummer : **0 355 500 B1**

# (12) EUROPÄISCHE PATENTSCHRIFT

(45) Veröffentlichungstag der Patentschrift :
**19.11.92 Patentblatt 92/47**

(51) Int. Cl.$^5$ : **B26D 7/18,** B29C 53/06

(21) Anmeldenummer : **89114208.5**

(22) Anmeldetag : **01.08.89**

(54) **Vorrichtung zum gehrungsgerechten Schneiden und Aneinanderfügen von Profilsträngen.**

(30) Priorität : **01.08.88 DE 8809805 U**
**27.01.89 DE 8900939 U**

(43) Veröffentlichungstag der Anmeldung :
**28.02.90 Patentblatt 90/09**

(45) Bekanntmachung des Hinweises auf die
Patenterteilung :
**19.11.92 Patentblatt 92/47**

(84) Benannte Vertragsstaaten :
**AT CH DE FR LI NL**

(56) Entgegenhaltungen :
**DE-A- 2 252 920**
**DE-A- 3 024 736**
**US-A- 3 299 755**

(73) Patentinhaber : **ETS ELEKTRO-THERMISCHE**
**SCHNEIDWERKZEUG GMBH**
**Dorfstrasse 14**
**W-8050 Freising-Attaching (DE)**

(72) Erfinder : **Wenger, Helmut, c/o ETS**
**Elektro-thermische**
**Schneidwerkzeug GmbH, Dorfstrasse 14**
**W-8050 Freising-Attaching (DE)**

(74) Vertreter : **Patentanwälte Grünecker,**
**Kinkeldey, Stockmair & Partner**
**Maximilianstrasse 58**
**W-8000 München 22 (DE)**

## Beschreibung

Die Erfindung bezieht sich auf eine Vorrichtung zum gehrungsgerechten Schneiden und Aneinanderfügen von Profilsträngen, insbesondere Abdichtungsprofile für Türen oder Fenster, mit einer Grundplatte, auf der zwei Profilhalter mit je einer Profilnut, einem diesen abdeckenden Haltedeckel und einer schrägen Abschlußkante angeordnet sind, wobei mindestens einer der beiden Profilhalter aus einer Schneidstellung, in der die Profilnuten der beiden Halter im wesentlichen miteinander fluchten, in eine Fügestellung überführbar ist, in der die Abschlußkanten der beiden Profilhalter aneinanderliegen, und mit einer Schweißeinrichtung, die zwei zueinander V-förmig angeordnete, je mit einer Schneidkante versehene Schweißklingen aufweist, die in Schneidstellung der Profilhalter an deren Abschlußkanten vorbeibewegbar sind.

Zum Abdichten der Flügelrahmen von Fenstern gegenüber dem Blendrahmen ist es üblich, innerhalb der Rahmen umlaufende Abdichtungsprofile vorzusehen. Während solche Profile an den Längsseiten der Rahmen ohne weiteres für eine gute Abdichtung sorgen, liegen die kritischen Stellen an den Ecken, an denen die Abdichtungsprofile aneinanderstoßen. Hier ist es erforderlich, eine dauerhafte und gehrungsgerechte Eckverbindung der Profilstränge zu erreichen.

Eine Vorrichtung zum Herstellen solcher Eckverbindungen ist aus der DE-C-3024 736 bekannt. Zum Herstellen einer Eckverbindung wird dort ein Strangprofil in die Profilnuten der beiden Profilhalter eingelegt.

Anschließend wird ein thermisches Schneidmesser von unten nach oben an den Abschlußkanten der Profilhalter vorbeigeführt, wodurch aus dem Profilstrang ein etwa trapezförmiges Strangstück entfernt wird. Da die gesamte Klinge des Thermomessers beheizt wird, werden die verbleibenden Stirnseiten des durchgeschnittenen Profilstranges beim Vorbeiführen des Messers automatisch bis auf Schweißtemperatur erwärmt. Das Thermomesser wird dann zwischen den beiden Profilhaltern herausgenommen oder wieder nach unten versenkt, wonach dann der eine Profilhalter auf den anderen Profilhalter zugeschwenkt wird, so daß die erwärmten Stirnkanten des Profilstranges aneinandergedrückt und verschweißt werden. Nach Aufklappen der Deckel kann der Profilstrang herausgenommen werden; die Eckverbindung ist fertig.

Während diese Vorrichtung bei einfachen Profilen dann ihren Dienst gut versieht, wenn die Eckverbindung bei einem durchgehenden Profilstrang hergestellt werden soll, treten Schwierigkeiten bei der letzten Ecke auf. Dann muß nämlich in jeden der Profilhalter ein Ende des Profilstranges eingelegt werden, wobei es nicht selten vorkommt, daß sich die beiden Enden zwischen den beiden Schweißklingen verklemmen, so daß der herausgeschnittene Teil der Profilstränge nicht automatisch nach unten fällt, sondern zwischen den Schweißklingen hängenbleibt und eventuell verschmort. Auch bei komplizierteren Profilsträngen, die einen filigranen Querschnitt aufweisen, kann es bei der bekannten Vorrichtung vorkommen, daß die aus einem Profilstrang herausgeschnittenen Abfallstücke zwischen den beiden Schweißklingen hängenbleiben. Hierdurch kann der Arbeitsprozeß beeinträchtigt werden.

Es ist daher Aufgabe der vorliegenden Erfindung, eine Vorrichtung der eingangs genannten Art so zu verbessern, daß auch komplizierte Profile sauber geschnitten und zusammengefügt werden können, wobei auf einfache Weise vermieden wird, daß aus den Profilsträngen herausgeschnittene Abfallstücke zwischen den Schweißklingen hängenbleiben.

Diese Aufgabe wird erfindungsgemäß dadurch gelöst, daß in Schneidstellung der Profilhalter zwischen den beiden Schweißklingen ein im wesentlichen dreieckförmiger Abstreifer angeordnet ist, dessen den Schweißklingen zugewandte Seitenkanten zusammen mit den Abschlußkanten der Profilhalter einen Durchtrittsspalt für die Schweißklingen bilden.

Hierdurch ist gewährleistet, daß unabhängig von der Querschnittsform des Profilstranges bzw. davon, ob ein durchgehender Profilstrang oder zwei Profilstangenden verarbeitet werden, zwischen den Schweißklingen keine Profilstrangreste eingeklemmt werden können. Zudem verbessert der Abstreifer durch die Bildung des Durchtrittsspaltes auch die Schnittgüte an den Stirnseiten der geschnittenen Profilstränge, was wiederum die Güte der Eckverbindung günstig beeinflußt.

Bei einer Ausführungsform, bei der die Schweißklingen beim Schneiden von unten nach oben geführt werden, ist es vorteilhaft, wenn der Abstreifer in Schneidstellung der Profilhalter mit seiner Unterseite im wesentlichen mit der Unterseite der Deckel fluchtet. Dadurch wird der Profilstrang beim Schneiden in ein und derselben Ebene sowohl durch die Deckel als auch durch den Abstreifer unterstützt.

Besonders günstig ist es, wenn der Abstreifer an einem diesen beim Verschwenken der Profilhalter aus der Schneidstellung in die Fügestellung aus dem von den Abschlußkanten gebildeten Zwischenraum herausführenden Überführen der Profilhalter aus der Schneidstellung in die Fügestellung automatisch aus dem Bereich zwischen den beiden Abschlußkanten herausbewegt wird. Schwenkhebel angebracht ist. Das hat den Vorteil, daß beim Überführen der Profilhalter aus der Schneidstellung in die Fügestellung automatisch aus dem Bereich zwischen den beiden Abschlußkanten herausbewegt wird.

Besonders einfach kann das erreicht werden, wenn der Schwenkhebel um eine zur Schwenkebene der beiden Profilhalter senkrechten Schwenkachse schwenkbar an einem der Profilhalter gelagert ist, wobei die Schwenkachse von der Abschlußkante des Profilhalters beabstandet ist. Das bewirkt, daß der Abstreifer mit seiner der Schwenkachse abgewandten Seitenkante an der Abschlußkante des anderen Profilhalters entlanggleitet und von dieser aus dem Bereich zwischen den Abschlußkanten der beiden Profilhalter herausgedrückt wird. Wenn die beiden Profilhalter in der Fügestellung einen Winkel einschließen, zumeist 90 , ist der Abstreifer mit dem Schwenkhebel in den Bereich des von den beiden Profilhaltern gebildeten Winkels geschwenkt.

Baulich einfach läßt sich die Vorrichtung dadurch ausbilden, daß einer der Profilhalter schwenkbar und der andere Profilhalter feststehend ausgebildet sind und daß der Schwenkhebel an dem feststehenden Profilhalter gelagert ist. Dadurch kann der schwenkbare Profilhalter übersichtlich und einfach zu handhaben sein.

Es ist auch günstig, wenn die Deckel der Profilhalter um eine im wesentlichen horizontale Achse schwenkbar angelenkt sind und daß die Schwenkachse des Schwenkhebels an dem Deckel eines der Profilhalter befestigt ist. Das hat den Vorteil, daß nicht nur in der Fügestellung der Abstreifer schnell aus dem Bereich zwischen den beiden Anschlußkanten der Profilhalter herausbewegt werden kann, sondern daß auch beim Einlegen eines neuen Profilstranges in die Profilhalter der Abstreifer automatisch zusammen mit den Deckeln hochgeklappt wird und somit das Einlegen des neuen Profilstranges nicht behindert.

Wenn an dem Profilhalter ein die Lage des Abstreifers in Schneidstellung bestimmender Anschlag für den Schwenkhebel angebracht ist, befindet sich der Abstreifer bei jedem Schneidvorgang in einer genau definierten Stellung, ohne daß es einer erneuten Einstellung bedarf.

Günstig ist auch, wenn der Schneidhebel über eine den Schwenkhebel an den Anschlag drückende Feder mit dem Profilhalter verbunden ist. Das bewirkt, daß beim Überführen der Profilhalter aus der Fügestellung in die Schneidstellung der Abstreifer selbsttätig wieder in den Bereich zwischen den Abschlußkanten der beiden Profilhalter gebracht wird. Ein manuelles Verschwenken erübrigt sich daher. Auf einen kurzen Nenner gebracht bewirken all diese Maßnahmen, daß der Abstreifer immer dann wenn er gebraucht wird, nämlich beim Schneiden des Profilstranges, selbsttätig an der erforderlichen Stelle sitzt, während er bei allen anderen Vorgängen, z. B. dem Aneinanderfügen der Profile und dem Einlegen eines neuen Profiles selbsttätig aus diesem Bereich herausgeschwenkt wird.

Insbesondere dann, wenn Eckverbindungen an verschiedenen komplizierten Profilen hergestellt werden sollen, ist es günstig, wenn der Abstreifer höhenverstellbar an dem Schwenkhebel angebracht ist. Damit kann der Abstreifer stets an die Art der zu verarbeitenden Profilstränge angepaßt werden. Eine baulich besonders einfache Art der Höhenverstellung des Abstreifers ergibt sich, wenn der Abstreifer mit einer Stellschraube an dem Schwenkhebel befestigt und mittels eines parallel zur Stellschraube angebrachten Führungsstiftes höhenverstellbar geführt ist. Bei komplizierten Profilen ist es auch günstig, wenn die Deckel jeweils zweiteilig ausgebildet sind mit einem schwenkbaren Grundkörper und einem daran lösbar befestigten Abdeckteil, da so das Abdeckteil stets an die komplizierten Formen des Profilstranges angepaßt werden kann. Gleiches gilt, wenn die Profilnut in einem lösbar an dem Profilhalter befestigten Halteteil ausgebildet ist. Günstig ist es auch, wenn die Unterseite des Abstreifers im Querschnitt genauso ausgebildet ist wie die Unterseite der Deckel. Das ist insbesondere dann von Vorteil, wenn Profilstränge mit vielen freiabstehenden Stegen verarbeitet werden, die dann in entsprechenden Nuten auf der Unterseite des Deckels und des Abstreifers beim Schneiden gehalten werden.

Im Zusammenhang mit der Auswechselbarkeit von Halteteil und Abdeckteil ist es besonders günstig, wenn die die Profilhalter tragende Grundplatte in einer Ausnehmung einer Gestellplatte in Richtung der Winkelhalbierenden der V-förmig angeordneten Schweißklingen bezüglich der Schweißeinrichtung horizontal verschiebbar gelagert ist. Damit es es nämlich auf einfache Weise möglich, nach Auswechseln der Halteteile den Abstand der schrägen Abschlußkanten der Profilhalter zu den V-förmig angeordneten Schweißklingen sauber und genau einzustellen.

Eine einfache Führung der Grundplatte in der Gestellplatte ergibt sich, wenn die Oberseite der Grundplatte im wesentlichen bündig mit der Oberseite der Gestellplatte abschließt, wobei die Grundplatte zum Rand hin abgestuft ausgebildet ist und der Rand der Ausnehmung der Gestellplatte entsprechend hinterschnitten ist. Die Stufenbreite und die Tiefe des Hinterschnitts können dabei so gewählt sein, daß die Ausnehmung bei jeder Stellung der Grundplatte durch diese verschlossen ist, so daß kein Abfall oder dergleichen durch die Ausnehmung unter die Gestellplatte gelangen kann.

Besonders günstig ist es, wenn am seitlichen Rand der Ausnehmung auf der Unterseite der Gestellplatte, den seitlichen Rand der Grundplatte untergreifende Führungsleisten angebracht sind. Nach Abnehmen der Führungsleisten kann die gesamte Grundplatte zusammen mit den darauf angebrachten Profilhaltern aus der Vorrichtung herausgenommen werden. Hierdurch wird die Wartungsfreundlichkeit der Vorrichtung in günstiger Weise verbessert.

Wenn die Grundplatte mit einer auf der Unterseite der Gestellplatte gelagerten, sich in Verschieberichtung erstreckenden Verstellspindel verbunden ist, auf der eine Rändelscheibe befestigt ist, deren Außenumfang die Gestellplatte nach oben durchsetzt, kann die Grundplatte auf einfache Weise dadurch verschoben werden, daß die Bedienperson an der Rändelscheibe dreht. Zweckmäßigerweise ist auf der Unterseite der Grundplatte ein mit einem Innengewinde versehener Lagerbock angebracht, der von der Verstellspindel durchsetzt ist, so daß das Außengewinde der Verstellspindel und das Innengewinde des Lagerbocks die Verschiebung der Grundplatte bewirkt. Auf diese Weise läßt sich durch Verschieben der Grundplatte der Abstand zwischen den Profilhaltern und den Schweißklingen bzw. dem Abstreifer und den Schweißklingen sehr genau einstellen und an die jeweiligen Erfordernisse der zu bearbeitenden Profilstränge anpassen.

Gemäß einer bevorzugten Ausführungsform ist die Schweißeinrichtung an einem höhenbeweglichen, über einen Elektromotor angetriebenen Träger angeordnet. Über den Elektromotor ist es möglich, die Zeit, die die Schweißklinge zum Hochfahren und damit zum Schneiden der Profilstränge benötigt, über die Drehzahl des Elektromotors reproduzierbar einzustellen, so daß stets das gleiche Arbeitsergebnis erhalten wird.

Baulich besonders einfach kann der Träger in gestellfesten, vertikalen Führungen gelagert sein, wobei auf der der Schweißeinrichtung abgewandten Rückseite des Trägers eine Zahnstange befestigt sein kann, die mit einem Ritzel eines gestellfest gelagerten Elektromotors in Eingriff steht.

Insbesondere dann, wenn die Halteteile und die Abdeckteile der Profilhalter für das Bearbeiten anderer Profile ausgetauscht werden, ist es günstig, wenn der Träger als vertikale Trägerplatte ausgebildet ist, auf deren Vorderseite ein Winkelprofil höhenverstellbar angeordnet ist, dessen einer Schenkel parallel an der Vorderseite der Trägerplatte anliegt und dessen anderer Schenkel horizontal von der Trägerplatte absteht, wobei an dem horizontalen Schenkel die Schweißeinrichtung befestigt ist. Über die Höhenverstellbarkeit des Winkelprofiles läßt sich auch die Schweißeinrichtung bezüglich der Trägerplatte in der Höhe verstellen. Hierdurch wird eine Hublagenveränderung, oder mit anderen Worten eine Einstellbarkeit des oberen Bewegungsende der Schweißeinrichtung erreicht. Das genaue Einstellen der oberen Endlage der Bewegung der Schweißeinrichtung ist deswegen von großer Wichtigkeit, da insbesondere dann, wenn filigranen Profile zu verarbeiten sind, ein Verschmieren der Schnittkanten der Profilstränge so gering wie möglich gehalten werden kann. Die obere Endlage kann so eingestellt weren, daß die Schweißklingen nur gerade bis zur Oberkante der Profilstränge belegt werden.

Die Höhenverstellbarkeit des Winkelprofils läßt sich baulich einfach erreichen, indem das Winkelprofil mit einer in einem auf der Vorderseite der Trägerplatte befestigten Lagerbock gelagerten, sich vertikal erstreckenden Verstellschraube verbunden ist, deren Schraubenkopf auf der nach oben weisenden Oberseite des Lagerbocks angeordnet ist. In dem horizontalen Schenkel des Winkelprofils ist eine Bohrung mit einem Innengewinde vorgesehen, das mit dem Außengewinde der Schraube zusammenwirkt. Wenn die Schraube in dem Lagerbock gedreht wird, bewirken die miteinander kämmenden Gewinde das Verschieben des Winkelprofiles entlang der Trägerplatte.

Ein exaktes Führen des höhenverstellbaren Winkelprofils läßt sich einfach erreichen, wenn auf der Rückseite des vertikalen Schenkels des Winkelprofils ein sich vertikal erstreckender Führungssteg ausgebildet ist, der in einen sich vertikal erstreckenden Führungsschlitz der Trägerplatte eingreift.

Ohne die Höhenverstellbarkeit zu beeinträchtigen, läßt sich das Winkelprofil sehr exakt an der Trägerplatte halten, wenn in den vertikalen Schenkeln des Winkelprofils mit Abstand beidseitig des Führungssteges sich vertikal erstreckende Langlöcher ausgebildet sind, die von in der Trägerplatte befestigten Schrauben durchsetzt sind, wobei sich die Schrauben mit ihrem Schraubenkopf über einen Federring auf der Vorderseite des vertikalen Schenkelprofils abstützen. Auf diese Weise wird das Winkelprofil mit seinem vertikalen Schenkel Federn gegen die Vorderseite der Trägerplatte gedrückt. Einer Höhenverstellung wirken nur die durch die Federringe aufgebrachten Reibkräfte entgegen. Diese Reibkräfte sorgen dafür, daß sich die vorgewählte Endlage der Schneideinrichtung während des Betriebs nicht unbeabsichtigt ändert.

Um die beiden Profilhalter auf einfache Weise aus der Schneidstellung in die Fügestellung und wieder zurück zu überführen, ist es günstig, wenn einer der beiden Profilhalter um eine vertikale Achse schwenkbar aus der Schneidstellung in die Fügestellung überführbar ist, wobei der Profilhalter drehfest mit einer sich vertikal nach unten durch die Grundplatte hindurch erstreckenden Schwenkwelle verbunden ist. Das Schwenken des Profilhalters kann z. B. durch einen an der Schwenkwelle angreifenden Motor bewirkt werden.

In diesem Zusammenhang ist es besonders günstig, wenn die Schwenkwelle über eine Rutschkupplung mit einem an der Grundplatte gehalterten Elektromotor verbunden ist. Hiermit sind zwei Vorteile verbunden. Zum einen bildet der Elektromotor zusammen mit den auf der Grundplatte der gehalterten Profilhaltern eine Baueinheit, die insgesamt durch Ausbau der Grundplatte aus der Gestellplatte ausder Vorrichtung entfernt werden kann. Zum anderen bewirkt die Rutschkupplung, daß nur ein vorbestimmtes Moment über die Schwenkwelle übertragen werden kann. Wenn daher der schwenkbare Profilhalter in die Fügestellung geschwenkt wird, und der Elektromotor weiterläuft, werden die beiden Profilhalter mit einer vorbestimmten Kraft zusammengedrückt, die während des gesamten Fügevorganges konstant bleibt.

Durch diese gleichbleibende Kraft, die auch bei jedem erneuten Fügevorgang stets denselben Betrag hat, werden gleichbleibende Arbeitsergebnisse erreicht, was insbesondere bei komplizierten und filigranen Profilen von großer Bedeutung ist.

Ein gleichbleibendes Arbeitsergebnis kann auf günstige Weise auch dadurch gefördert werden, daß der Elektromotor für die Schwenkwelle und der Elektromotor für den höhenbeweglichen Träger mit einer programmierbaren Steuerschaltung verbunden sind. Mit dieser Steuerschaltung kann der Betrieb der beiden Elektromotoren zeitlich so aufeinander abgestimmt werden, daß die Vorrichtung nicht nur vollautomatisch betrieben werden kann, sondern daß insbesondere auch die Schneid-, Anwärm- und Fügezeiten auf die jeweils zu verarbeitenden Profilstränge eingestellt und im weiteren konstant gehalten werden können.

Wenn an den Profilhaltern Rasten angebracht sind, die im geschlossenen Zustand der Deckel in Gegenrasten der Deckel eingreifen, brauchen die Deckel beim Schneiden der Profilstränge nicht festgehalten zu werden. Die vorzugsweise als Kugelrasten ausgebildeten Rasten sorgen vielmehr dafür, daß die Deckel durch das Hochfahren der Schweißklinge nicht geöffnet werden. Bei etwas größeren Kräften, wie sie von der Bedienperson zum Öffnen der Deckel aufgebracht werden, gelangen die Rasten jedoch außer Eingriff.

Im folgenden werden Ausführungsbeispiele der Erfindung anhand einer Zeichnung näher erläutert. Es zeigen:

Fig. 1 eine Draufsicht auf ein erstes Ausführungsbeispiel der Vorrichtung, in Schneidstellung,

Fig. 2 eine Draufsicht auf die Vorrichtung aus Fig. 1 in einer Zwischenstellung,

Fig. 3 die Vorrichtung aus Fig. 1 in Fügestellung,

Fig. 4 eine perspektivische Ansicht auf die Vorrichtung aus Fig. 1 von schräg vorne mit aufgeklappten Deckeln,

Fig. 5 eine Vorderansicht auf die Vorrichtung aus Fig. 1,

Fig. 6 eine Schnittansicht der Vorrichtung aus Fig. 1 entlang der Linie VI-VI aus Fig. 5,

Fig. 7 eine Draufsicht auf ein zweites Ausführungsbeispiel der Vorrichtung, in Schneidstellung,

Fig. 8 eine Schnittansicht der Vorrichtung aus Fig. 7 entlang der Linie VIII-VIII,

Fig. 9 eine Schnittansicht durch die Vorrichtung aus Fig. 7 entlang der Linie IX-IX, und

Fig. 10 eine Schnittansicht durch die Vorrichtung aus Fig. 7 entlang der Linie X-X.

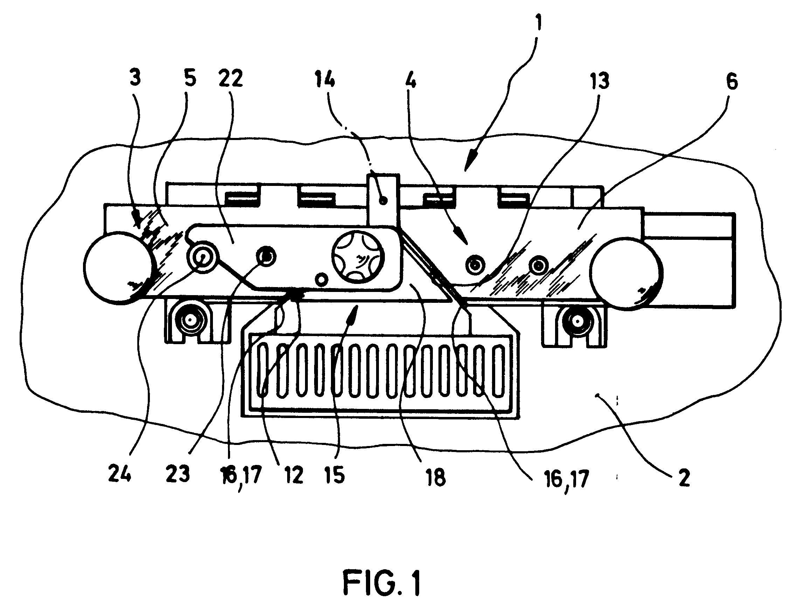

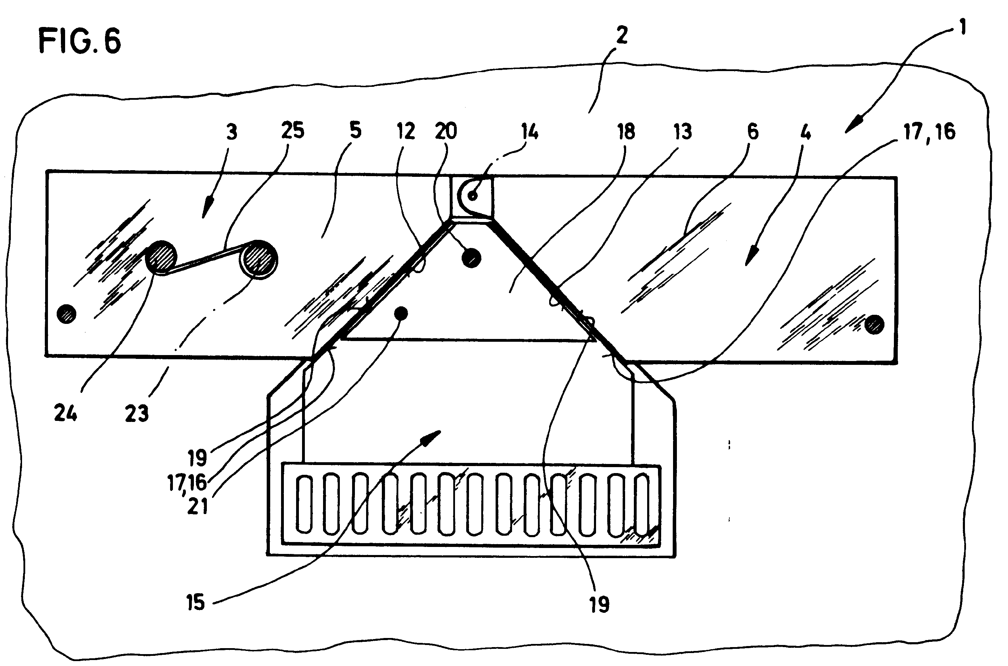

In den Fig. 1-6 ist ein erstes Ausführungsbeispiel einer Vorrichtung 1 dargestellt zum gehrungsgerechten Schneiden und Aneinanderfügen von nicht dargestellten Profilsträngen, insbesondere Abdichtungsprofile für Türen oder Fenster. Es handelt sich hierbei zumeist um elastomere Kunststoffprofile mit strukturierten, zumeist Dichtlippen aufweisenden Oberflächen.

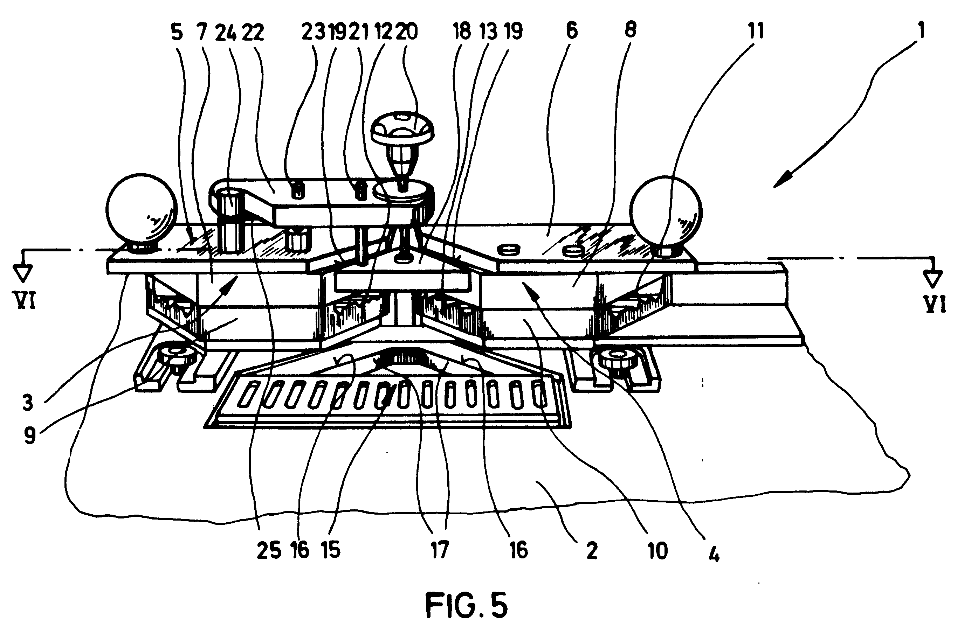

Die Vorrichtung umfaßt eine Grundplatte 2, auf der zwei Profilhalter 3 und 4 angeordnet sind. Jeder Profilhalter 3 und 4 weist einen um eine horizontale Achse, die sich jeweils in Längsrichtung der Profilhalter erstreckt, schwenkbaren Deckel 5 bzw. 6 auf Auf der Unterseite der Deckel 5 und 6 sind jeweils Abdeckteile 7 und 8 mittels Schrauben lösbar befestigt. In gleicher Weise sind auf dem unteren Abschnitt der Profilhalter 3 und 4 Halteteile 9 und 10 lösbar befestigt, in welchen Profilnuten 11 vorgesehen sind, die dem zu verarbeitenden Profilstrang entsprechen. Obwohl in der Zeichnung nicht dargestellt, können solche Profilnuten auch auf der Unterseite der Abdeckteile 7 und 8 der Deckel 5 und 6 vorgesehen sein. Im geschlossenen Zustand der Profilhalter 3 und 4 liegen die Abdeckteile mit ihren Unterseiten auf den Oberseiten der Halteteile 9 und 10 (vgl. Fig. 5).

Die Profilhalter 3 und 4 weisen stirnseitig einander zugewandte schräge Abschlußkanten 12 und 13 auf. Die Schrägheit der beiden Abschlußkanten 12 und 13 hängt davon ab, in welchem Gehrungswinkel die Profilstränge geschnitten und miteinander verbunden werden sollen.

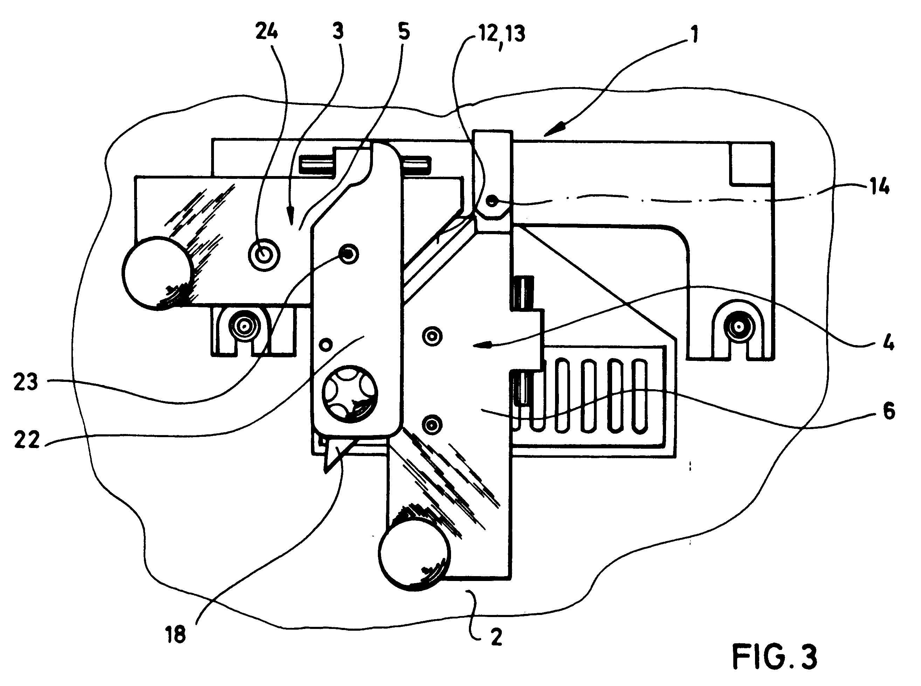

Ein Profilhalter, bei dem hier gezeigten Ausführungsbeispiel der rechte Profilhalter 4, ist um eine vertikale Achse 14 schwenkbar auf der Grundplatte 2 angeordnet. Die Achse 14 liegt dort, wo sich die gedachten Verlängerungen der beiden Abschlußkanten 12 und 13 treffen. Durch die schwenkbare Ausbildung des Profilhalters 4 ist dieser aus einer Schneidstellung (vgl. Fig. 1) in eine Fügestellung (vgl. Fig. 3) schwenkbar. Zwischen den beiden Profilhaltern 3 und 4 ist eine Schneideinrichtung 15 mit zwei V-förmig zueinander angeordneten, je eine Schneidkante 16 aufweisenden Schweißklingen 17 vorgesehen, die aus der Ebene der Grundplatte 2 heraus nach oben bewegt werden kann. Diese Bewegung erfolgt mittels eines an sich bekannten Fußhebels, der daher nicht dargestellt ist. Das Nachobenbewegen der Schweißklingen 17 kann nur in der Schneidstellung (vgl. Fig. 1) erfolgen. Die Schneidklingen bewegen sich dann dicht an den Abschlußkanten 12 und 13 vorbei nach oben. In dem von den beiden Schweißklingen 17 gebildeten Winkel ist in Schneidstellung ein im wesentlichen dreieckförmiger Abstreifer 18 angeordnet, dessen den Schweißklingen 17 zugewandten Seitenkanten 19 zusammen mit den Abschlußkanten 12 und 13 einen Durchtrittsspalt für die Schweißklingen 17 bilden. Die Unterseite des Abstreifers 18 fluchtet in Schneidstellung der Profilhalter 3 und 4 etwa mit der Unterseite der Deckel bzw. der daran befestigten Abdeckteile 7 und 8.

Der Abstreifer 18 ist mittels einer Stellschraube 20 und einem parallel dazu angeordneten Führungsstift 21 höhenverstellbar an einem Schwenkhebel 22 befestigt. Der Schwenkhebel 22 wiederum ist an einer senkrecht an der Oberseite eines Deckels 5 angebrachten Schwenkachse 23 horizontal schenkbar gelagert. Die Schwenkachse 23 ist mit Abstand zur Abschlußkante 12 des zugehörigen Profilhalters 3 angeordnet.

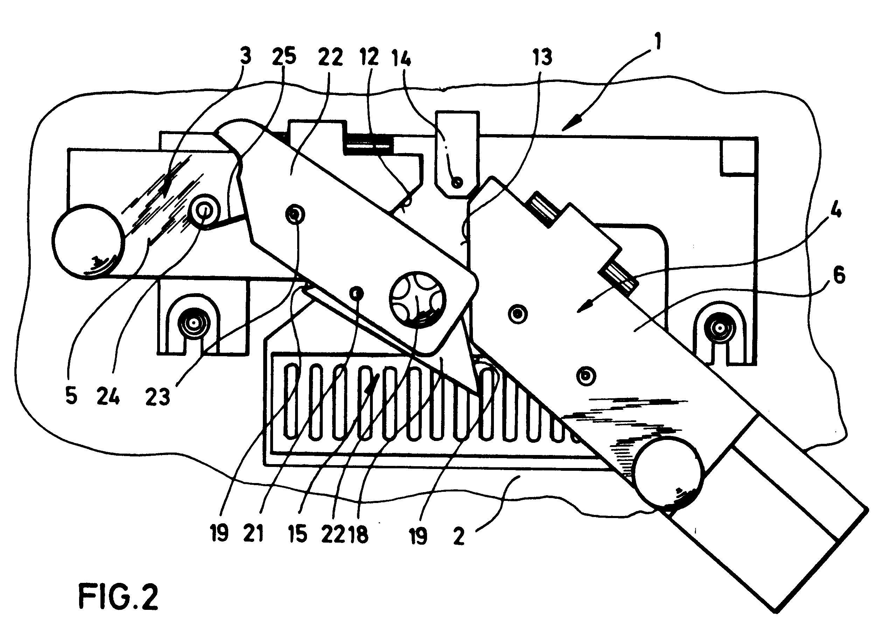

Aus Fig. 2 ist gut zu erkennen, daß die Schwenkachse 23 an dem feststehenden Profilhalter 3 befestigt ist.

An dem Deckel 5 des Profilhalters 3 ist ein Anschlag 24 vorgesehen, der die Schwenkbewegung des Schwenkhebels 22 in der Weise begrenzt, daß der Abstreifer 18 in Schneidstellung der Profilhalter 3 und 4 den Durchtrittsspalt freilassend zwischen den einander zugewandten Abschlußkanten 12 und 13 liegt. Ferner ist an der Schwenkachse 23 eine einerseits an dem Schwenkhebel 22 und andererseits an dem Anschlag 24 angreifende Feder 25 vorgesehen, die den Schwenkhebel 22 stets gegen den Anschlag 24 drückt.

Obwohl bei dem hier gezeigten Ausführungsbeispiel nicht dargestellt, kann die Unterseite des Abstreifers 18 dem Profil entsprechend angepaßte Profilnuten aufweisen, ebenso wie die Unterseite der Abdeckleisten 7 und 8.

Im folgenden wird die Funktionsweise der obenbeschriebenen Vorrichtung näher erläutert.

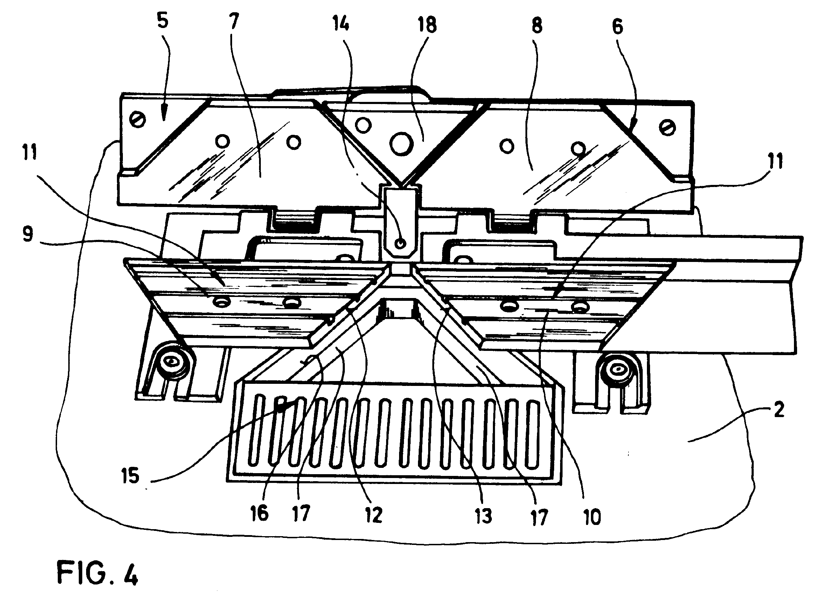

Ausgehend von dem in Fig. 4 gezeigten Zustand, bei dem die Deckel 5 und 6 aufgeklappt sind, wobei automatisch der Abstreifer 18 auch hochgeklappt ist, wird ein Profilstrang in die Profilnuten 11 der Halteteile 9 und 10 der Profilhalter 3 und 4 eingelegt. Anschließend werden die Deckel 5 und 6 nach vorne geklappt, so daß die Unterseiten der Abdeckteile 7 und 8 wie auch die Unterseite des Abstreifers 9 auf dem Profil aufliegen. Sodann wird die Schneideinrichtung aus der Ebene der Grundplatte 2 an den Abschlußkanten 12 und 13 vorbei nach oben geführt. Die Schweißklingen 17 bewegen sich durch den zwischen den Seitenkanten 19 des Abstreifers 18 und den Abschlußkanten 12 und 13 gebildeten Durchtrittsspalt, bis das Profil durchgetrennt ist. Gleichzeitig werden ie Stirnseiten der in den Profilhaltern 3 und 4 verbleibenden Profile auf Schweißtemperatur erwärmt. Die Schweißklingen bewegen sich dabei weiter nach oben, bis die Unterkante der Schweißklingen über der Unterseite der Abdeckteile 7 und 8 bzw. der Unterseite des Abstreifers 18 liegt. Das aus dem Profil herausgeschnittene Profilstück bleibt dabei an dem Abstreifer hängen und fällt nach unten. Sodann wird der rechte Profilhalter 4 ergriffen und im Uhrzeigersinn um die Schwenkachse 14 geschwenkt. Seine Abschlußkante 13 gleitet dabei an der zugewandten Seitenkante 19 des Abstreifers 18, wodurch der Abstreifer 18 mit seinem Schwenkhebel 22 um die Schwenkachse 23 aus dem Bereich zwischen den beiden Abschlußkanten 12 und 13 herausgeschwenkt wird. Beim weiteren Verschwenken nimmt die Vorrichtung 1 die in Fig. 3 dargestellte Stellung an. Nun liegen die beiden Abschlußkanten 12 und 13 aneinander, wodurch die stirnseitigen Enden des Profilstranges aneiandergedrückt und verschweißt werden. Der Abstreifer 18 ist in dieser Stellung vollständig herausgeschwenkt.

Nach einer kurzen Verweildauer werden die Deckel 5 und 6 geöffnet, so daß die fertige Eckverbindung an dem Profilstrang entnommen werden kann. Nach Zurückschwenken des rechten Profilhalters 4 liegt die Vorrichtung wieder in dem in Fig. 4 gezeigten Zustan , so daß ein neuer Profilstrang eingelegt werden kann.

Besonders hervorzuheben ist, daß auch dann, wenn kein durchgehender Profilstrang, sondern zwei Profilstrangenden in die Vorrichtung eingelegt werden, die herausgeschnittenen Profilreste nicht an den Schweißklingen 17 anhaften und verschmoren können. Besonders erwähnenswert ist, daß der Abstreifer 18 trotz seiner wichtigen Funktion nie stört, da er selbsttätig aus seinem Wirkungsbereich entfernt und in diesen zurückgeführt wird.

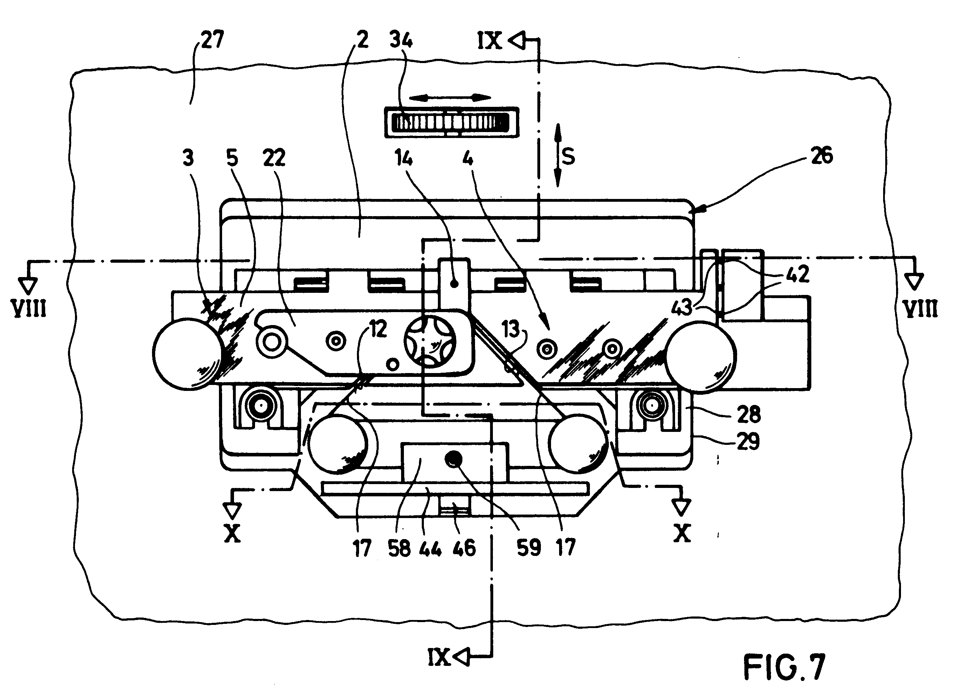

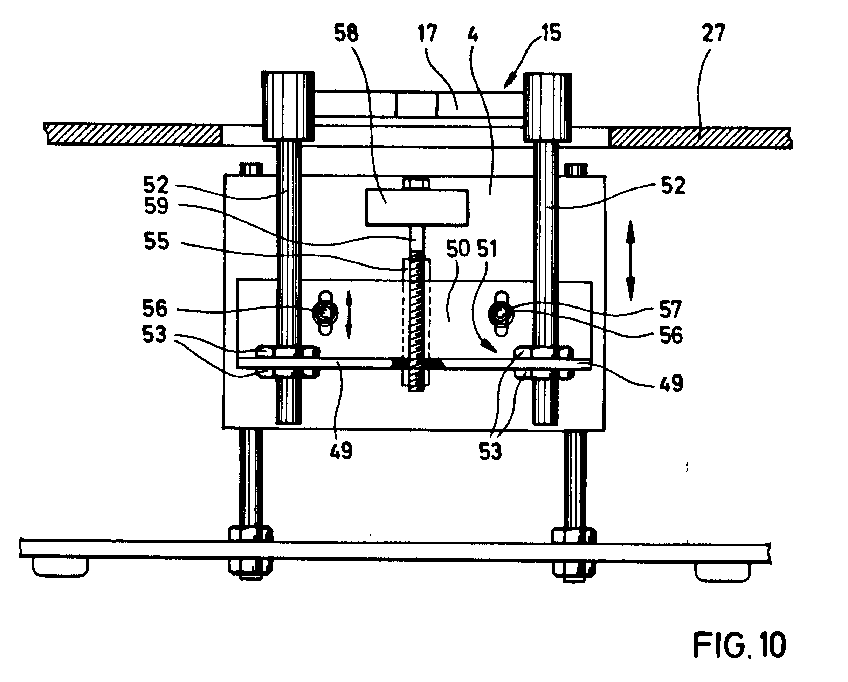

In den Fig. 7-10 ist ein zweites Ausführungsbeispiel einer erfindungsgemäßen Vorrichtung 1 näher dargestellt. Diese Vorrichtung ist prinzipiell genauso aufgebaut, wie die obenbeschriebene Vorrichtung, so daß für gleiche und gleichartige Bauteile dieselben Bezugszeichen verwendet werden. Im folgenden wird lediglich auf die Unterschiede zum ersten Ausführungsbeispiel eingegangen.

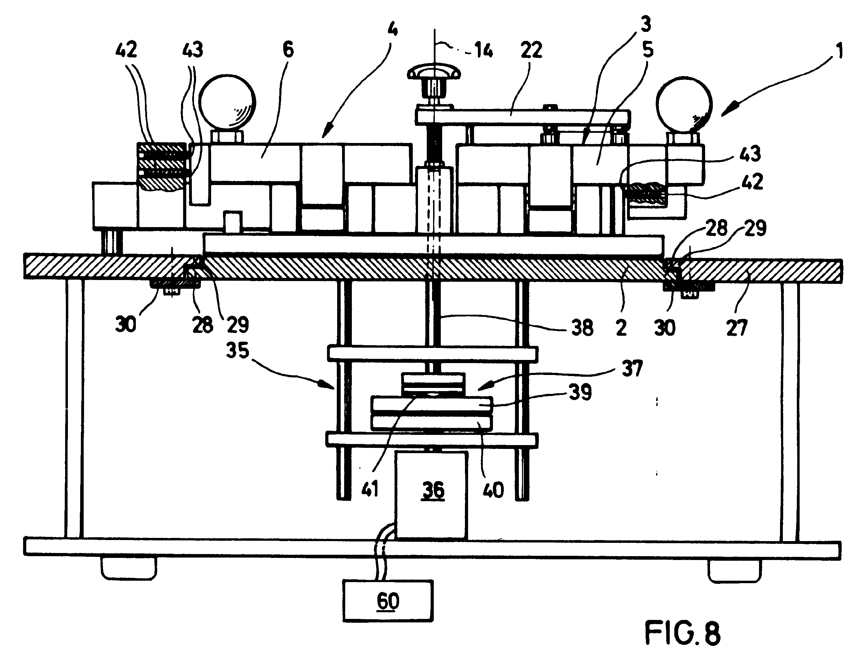

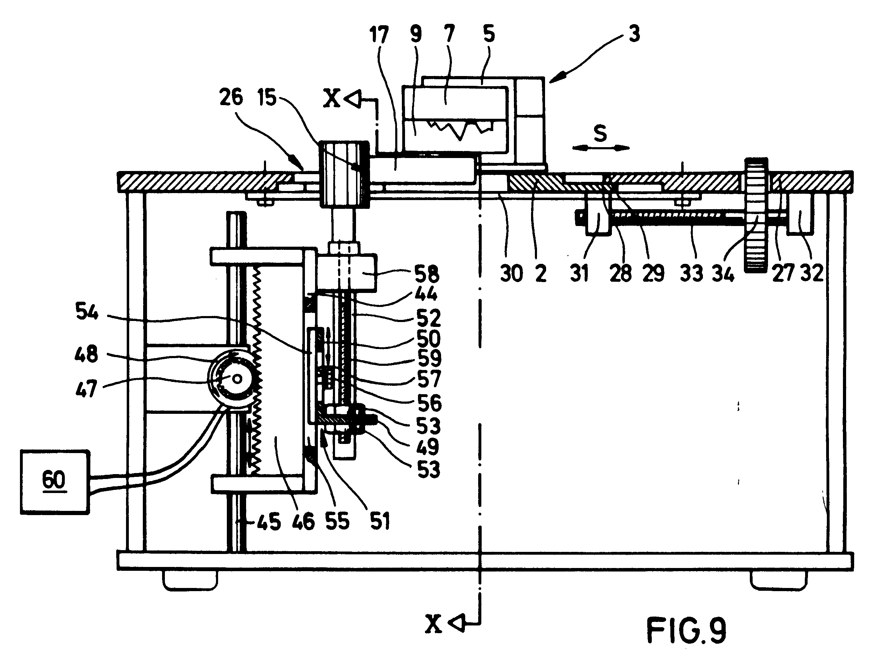

Wie besonders gut aus Fig. 7 und den Schnittdarstellungen in Fig. 8 und 9 erkennbar ist, ist die Grundplatte 2 in Richtung des Doppelpfeiles S verschiebbar in einer Ausnehmung 26 einer Gestellplatte 27 gelagert. Die durch den Doppelpfeil S angedeutete Richtung entspricht der Richtung der Winkelhalbierenden der beiden V-förmig zueinanderlaufenden Schweißklingen 17. Die Oberseite der Grundplatte 2 schließt im wesentlichen bündig mit der Oberseite der Gestellplatte 27 ab. Die Grundplatte 2 ist zu ihrem Rand 28 hin abgestuft ausgebildet, wobei der Rand 29 der Ausnehmung 26 entsprechend hinterschnitten ist. Für den seitlichen Rand 28 bzw. 29 bedeutet dies, daß die Hinterschneidung des Rands 29 der Stufe im Rand 28 angepaßt ist (vgl. Fig. 8). Bezüglich der vorderen und hinteren Ränder 28 bzw. 29 ist der abgestufte Rand 28 und die Hinterschneidung am Rand 29 entsprechend dem möglichen Verschiebeweg der Grundplatte 2 so großzügig bemessen, daß die Grundplatte 2 in jeder Stellung den seitlichen und hinteren Rand der Ausnehmung 26 abdeckt (vgl. Fig. 9). Am seitlichen Rand 29 der Ausnehmung 26 sind an der Unterseite der Gestellplatte 27 Führungsleisten 30 angeschraubt, die den seitlichen Rand 28 der Grundplatte 2 unterfangen. Die Grundplatte 2 wird somit zwischen dem Rand 29 der Ausnehmung 26 und den Führungsleisten 30 gehalten.

Wie besonders gut aus Fig. 9 ersichtlich ist, ist auf der Unterseite der Grundplatte 2 ein mit einem Innengewinde versehener Lagerklotz 31 befestigt. Der Schweißeinrichtung 15 gegenüberliegend ist hinter den Profilhaltern 3 und 4 auf der Unterseite der Gestellplatte 27 außerdem ein Lagerbock 32 befestigt. In dem Lagerbock 32 ist eine sich in Richtung des Doppelpfeiles S erstreckende Verstellspindel 33 drehbar gelagert. Die Verstellspindel ist außerhalb des Lagerbocks 32 mit einem Gewinde versehen, welches in das Innengewinde des Lagerklotzes 31 eingreift. Zwischen Lagerklotz 31 und Lagerbock 32 ist auf der Verstellspindel 33 eine Rändelscheibe 34 drehfest angebracht, und zwar derart, daß sie durch einen Durchbruch in der Gestellplatte 27 bis zu deren Oberseite reicht. Durch Drehen der von der Oberseite der Gestellplatte 27 her zugänglichen Rendelscheibe 34 (vgl. Fig. 7) dreht sich auch die Verstellspindel 33, wobei deren Außengewinde mit dem Innengewinde des Lagerklotzes 31 zusammenwirkt und eine Verschiebung der Grundplatte 2 in Richtung des Doppelpfeiles S bewirkt.

Wie besonders gut aus Fig. 8 ersichtlich ist, ist auf der Unterseite der Grundplatte 2 über ein Gerüst 35 ein Elektromotor 36 angeordnet. Der Elektromotor 36 steht über eine Kupplung 37 und eine Schwenkwelle 38 mit dem schwenkbaren Profilhalter 4 in Verbindung. Die Schwenkwelle 38 liegt genau in der Schwenkachse 14 und ist drehfest mit dem Profilhalter 4 verbunden. Die Kupplung 37 ist als Rutschkupplung ausgebildet, wobei eine obere Scheibe 39 auf der Schwenkwelle 38 und eine untere Scheibe 40 auf der Welle des Elektromotors 36 angebracht ist. Die obere Scheibe 39 wird über einen sich an der Schwenkwelle 38 abstützenden Federring 41 gegen die untere Scheibe 40 gedrückt. Die zwischen den beiden Scheiben 39 und 40 herrschende Reibung bewirkt, daß beim Betrieb des Elektromotors 36 die Schwenkwelle 38 angetrieben wird, was ein Verschwenken des Profilhalters 4 zur Folge hat. Wenn jedoch der Profilhalter 4 gegen ein Hindernis stößt, z. B. dann, wenn die beiden Profilhalter 3 und 4 mit ihren Abschlußkanten 12 und 13 aneinanderliegen, rutscht die untere Scheibe 40 der Rutschkupplung 37 durch, so daß der Profilhalter 4 nicht weiter verschwenkt werden kann. Das Weiterlaufenlassen des Elektromotors 36 bewirkt jedoch, daß die Abschlußkanten 12 und 13 der beiden Profilhalter 3 und 4 stets mit einer gleichmäßigen Kraft gegeneinandergedrückt werden. Wie aus Fig. 8 weiterhin noch ersichtlich ist, sind an den Profilhaltern 3 und 4 seitlich Kugelrasten 42 vorgesehen, die in Rastvertiefungen 43 der Deckel 5 und 6 eingreifen, wenn sich die Deckel 5 und 6 im geschlossenen Zustand befinden. Dadurch können die Deckel 5 und 6 nur durch Aufbringen einer vorbestimmten Kraft geöffnet werden.

Wie besser aus Fig. 9 hervorgeht, ist die Schneid- und Schweißeinrichtung 15, die die V-förmig zueinander geneigten Schweißklingen 17 trägt, an einer höhenbeweglichen Trägerplatte 44 angeordnet. Die Trägerplatte 44 ist an gestellfesten vertikalen Führungssäulen 45 gelagert, wobei auf der den Schweißklingen 17 abgewandten Rückseite der Trägerplatte 44 eine vertikal ausgerichtete Zahnstange 46 befestigt ist, die mit einem Ritzel 47 eines gestellfest gelagerten Elektromotors 48 in Eingriff steht. Wenn das Ritzel 47 durch den Elektromotor 48 angetrieben wird, wird über die Zahnstange 46 die Trägerplatte 44 nach oben oder unten bewegt. Das hat zur Folge, daß die an der Trägerplatte 44 angebrachte Schneid- und Schweißeinrichtung 15 ebenfalls nach oben und unten bewegt wird.

Wie aus der Fig. 9 ebenfalls ersichtlich ist, ist die Schneid- und Schweißeinrichtung 15 genaugenommen an dem unteren horizontalen Schenkel 49 eines mit seinem vertikalen Schenkel 50 an der Vorderseite der Trägerplatte 44 höhenverstellbaren Winkelprofils 51 befestigt. Wie aus Fig. 9 ersichtlich ist, erfolgt die Befestigung über eine mit den Schweißklingen 17 verbundene Säule 52, die eine Bohrung in dem unteren Schenkel 49 durchsetzt und durch zwei gegenüberliegende Muttern 53 gekontert ist.

Auf der Rückseite des vertikalen Schenkels 50 des Winkelprofils 51 ist ein vertikaler Führungssteg 54 ausgebildet, der in einen vertikalen Führungsschlitz 55 der Trägerplatte 44 eingreift. Die Breite des Führungssteges 54 und die Breite des Führungsschlitzes 55 sind aufeinander abgestimmt, so daß eine seitliche Bewegung des Winkelprofiles 51 nicht möglich ist. Die Länge des Führungsschlitzes 55 ist hingegen größer als die Länge des Führungssteges 54, so daß der Führungsschlitz 55 eine Höhenbewegung des Winkelprofiles 51 zuläßt. Beidseitig und mit Abstand von dem vertikalen Führungssteg 54 sind in dem vertikalen Schenkel des Winkelprofiles 51 Langlöcher vorgesehen, die von in der Trägerplatte 44 befestigten Schrauben 56 durchsetzt sind. Zwischen dem Kopf der Schrauben 56 und der Vorderseite des vertikalen Schenkels 50 des Winkelprofils 51 ist jeweils ein Federring 57 vorgesehen, welche Federringe dafür sorgen, daß der vertikale Schenkel 50 des Winkelprofils 51 stetss an der Vorderseite der Trägerplatte 44 anliegt.

Oberhalb des Winkelprofils 51 ist auf der Vorderseite der Trägerplatte 44 ein Lagerbock 58 befestigt, der von einer vertikalen Verstellschraube 59 durchsetzt ist, die mit ihrem Außengewinde in eine Bohrung mit Innengewinde in dem horizontalen unteren Schenkel 49 des Winkelprofiles 51 eingreift. Der Schraubenkopf der Verstellschraube 59 stützt sich auf der Oberseite des Lagerbocks 58 ab. Zum Verstellen der Hublage bzw. des oberen Endes der Bewegung der Schneid- und Schweißeinrichtung 15 reicht es, wenn die Verstellschraube 59 mit einem üblichen Werkzeug gedreht wird. Dadurch verdreht sich das Gewinde der Verstellschraube 59 in dem Innengewinde in dem unteren horizontalen Schenkel 49 des Winkelprofils 51, was zur Folge hat, daß das Winkelprofil 51 je nach Drehrichtung der Verstellschraube 59 nach oben bzw. nach unten verschoben wird.

Wie aus den Fig. noch ersichtlich ist, sind sowohl der Elektromotor 48 als auch der Elektromotor 36 mit einer programmierbaren Steuerschaltung 60 verbunden, deren Funktionsweise im folgenden beschrieben wird.

Prinzipiell funktioniert das zweite Ausführungsbeispiel der erfindungsgemäßen Vorrichtung 1 genauso, wie das erste Ausführungsbeispiel, mit dem Unterschied, daß aufgrund der elektromotorischen Antriebe und der Steuerschaltung 60 die Vorrichtung automatisch betrieben werden kann. Ferner sind verschiedene Verstellmöglichkeiten vorgesehen, die das Anpassen der Vorrichtung an verschiedene Abdeckteile 7, 8 bzw. Halteteile 9, 10 ermöglicht. Dies ist immer dann begrüßenswert, wenn mit ein und derselben Vorrichtung völlig verschiedene Profilstränge verarbeitet werden sollen. Bevor die Vorrichtung 1 in Betrieb genommen wird und nachdem entsprechende Halteteile 9, 10 und Abdeckteile 7, 8 eingebaut worden sind, wird die Grundplatte 2 durch Drehen der Rendelscheibe 34 zunächst in ihre hintere Endstellung verschoben. Dann wird durch Betätigung des Elektromotors 48 die Schneid- und Schweißvorrichtung 15 in ihre obere Endlage gefahren. Nun dreht man die Rendelscheibe 34 in die entgegengesetzte Richtung, so daß sich die Grundplatte 2 nach vorne bewegt, und zwar soweit, bis der gewünschte Abstand zwischen den Schweißklingen 17 und den Abschlußkanten 12 und 13 der Profilhalter 3 und 4 erreicht ist. Den Abstand wird man so wählen, daß die Schweißklingen 17 etwa in der Mitte zwischen den Seitenkanten des Abstreifers 18 und den Abschlußkanten 12, 13 der Profilhalter 3 und 4 liegt (vgl. Fig. 7). Dann dreht man die Verstellschraube 59 soweit, bis die Oberkante der Schweißklingen 17 knapp oberhalb der obersten Kante eines in die Halteteile eingelegten Profilstranges legt. Dies entspricht in der Regel der Unterkante der Abdeckteile 7 bzw. 8.

Nachdem diese Einstellarbeiten vorgenommen worden sind, kann die Vorrichtung eingeschaltet werden. Die Steuerschaltung 60 ist so ausgelegt, daß die Schneid- und Schweißeinrichtung 15 zunächst nach unten fährt. Die Bedienperson kann nun die Deckel 5 und 6 öffnen und in die Profilhalter einen Profilstrang einlegen. Die Deckel 5 und 6 werden verschlossen und in der verschlossenen Stellung durch die Kugelrasten 42 gehalten. Sobald die Schweißklingen 17 auf Betriebstemperatur sind, wird der Elektromotor 48 betätigt, so daß die Schneid- und Schweißeinrichtung 15 in ihre obere Endlage gefahren wird. Dabei durchtrennen die Schweißklingen 17 mit vorbestimmter Geschwindigkeit die Profilstränge. In ihrer oberen Endstellung bleibt die Schneid- und Schweißeinrichtung 15 solange, bis die abgeschnittenen Enden der Profilstränge ihre Fügetemperatur erreicht haben. Sodann fährt der Elektromotor 48 die Schneid- und Schweißeinrichtung 15 nach unten, wonach der Elektromotor 46 über die Rutschkupplung 37 die Schwenkwelle 38 antreibt und den Profilhalter 4 gegen den Profilhalter 3 schwenkt. Wie bei dem ersten Ausführungsbeispiel auch wird dabei der Abstreifer 18 automatisch aus dem Bereich zwischen den beiden Abschlußkanten 12 und 13 herausgeschwenkt. Während nun die beiden Abschlußkanten 12 und 13 aneinanderliegen, wird der Elektromotor 36 weiterbetätigt, so daß über die Rutschkupplung 37 stets eine gleichbleibende Kraft auf die beiden aneinandergedrückten Profilstrangenden ausgeübt wird. Nach einer vorbestimmten Fügezeit schaltet der Elektromotor 36 ab. Die Deckel 5 und 6 der Profilhalter 3 und 4 können nun geöffnet werden, wonach die fertige Eckverbindung der aneinandergefügten Profilstrangenden aus der Vorrichtung herausgenommen werden kann. Anschließend wird der Elektromotor 36 in entgegengesetzter Richtung angetrieben, so daß der Profilhaalter 4 wieder nach außen geschwenkt wird. Nun kann der nächste Profilstrang eingelegt werden, wonach sich der obenbeschriebene Vorgang wiederholt.

**Patentansprüche**

1. Vorrichtung zum gehrungsgerechten Schneiden und Aneinanderfügen von Profilsträngen, insbesondere Abdichtungsprofilen für Türen oder Fenster, mit einer Grundplatte (2), auf der zwei Profilhalter (3,4) mit je einer Profilnut (11), einem diese abdeckenden Haltedeckel (5,6) und einer schrägen Abschlußkante (12,13) angeordnet sind, wobei mindestens einer der beiden Profilhalter (3,4) aus einer Schneidstellung, in der die Profilnuten (11) der beiden Halter (3,4) im wesentlichen miteinander fluchten, in eine Fügestellung überführbar ist, in der die Abschlußkanten (12,13) der beiden Profilhalter (3,4) aneinanderliegen, und mit einer Schweißeinrichtung (15), die zwei zueinander V-förmig angeordnete, je mit einer Schneidkante (16) versehene Schweißklingen (17) aufweist, die in Schneidstellung der Profilhalter (3,4) an deren Abschlußkanten (12,13) vorbeibewegbar sind, dadurch **gekennzeichnet,** daß in Schneidstellung der Profilhalter (3, 4) zwischen den beiden Schweißklingen (17) ein im wesentlichen dreieckförmiger Abstreifer (18) angeordnet ist, dessen den Schweißklingen (17) zugewandte Seitenkanten (19) zusammen mit den Abschlußkanten (12, 13 der Profilhalter (3, 4) einen Durchtrittsspalt für die Schweißklingen (17) bilden.

2. Vorrichtung nach Anspruch 1, bei der die Schweißklingen beim Schneiden von unten nach oben geführt werden, dadurch gekennzeichnet, daß der Abstreifer (18) in Schneidstellung der Profilhalter (3, 4) mit seiner Unterseite im wesentlichen mit der Unterseite der Deckel (5, 6) fluchtet.

3. Vorrichtung nach Anspruch 1 oder 2, dadurch gekennzeichnet, daß der Abstreifer (18) an einem diesen beim Verschwenken der Profilhalter (3, 4) aus der Schneidstellung in die Fügestellung aus dem von den Abschlußkanten (12, 13) gebildeten Zwischenraum herausführenden Schwenkhebel (22) angebracht ist.

4. Vorrichtung nach Anspruch 1 bis 3, dadurch gekennzeichnet, daß der Schwenkhebel (22) um eine zur Schwenkebene der beiden Profilhalter (3, 4) senkrechten Schwenkachse (23) schwenkbar an einem der Profilhalter (3) gelagert ist, wobei die Schwenkachse 23) von der Abschlußkante (12) des Profilhalters (3) beabstandet ist.

5. Vorrichtung nach Anspruch 3 oder 4, dadurch gekennzeichnet, daß einer der Profilhalter (4) schwenkbar und der andere Profilhalter (3) feststehend ausgebildet sind und daß der Schwenkhebel (22) an dem feststehenden Profilhalter (3) gelagert ist.

6. Vorrichtung nach einem der Ansprüche 3 bis 5, dadurch gekennzeichnet, daß die Deckel (5, 6) der Profilhalter (3, 4) um eine im wesentlichen horizontale Achse schwenkbar angelenkt sind und daß die Schwenkachse (23) des Schwenkhebels (22) an dem Decke (5) eines der Profilhalter (3) befestigt ist.

7. Vorrichtung nach einem der Ansprüche 3 bis 6, dadurch gekennzeichnet, daß an dem Profilhalter (3) ein die Lage des Abstreifers (18) in Schneidstellung bestimmender Anschlag (24) für den Schwenkhebel (22) angebracht ist.

8. Vorrichtung nach einem der Ansprüche 3 bis 7, dadurch gekennzeichnet, daß der Schwenkhebel (22) über eine den Schwenkhebel (22) an den Anschlag (24) drückende Feder (25) mit dem Profilhalter (3) verbunden ist.

9. Vorrichtung nach einem der Ansprüche 3 bis 8, dadurch gekennzeichnet, daß der Abstreifer (18) höhenverstellbar an dem Schwenkhebel (22) angebracht ist.

10. Vorrichtung nach einem der Ansprüche 3 bis 9, dadurch gekennzeichnet, daß der Abstreifer (18) mit einer Stellschraube (20) an dem Schwenkhebel (22) befestigt und mittels eines parallel zur Stellschraube (20) angebrachten Führungsstifts (21) höhenverstellbar geführt ist.

11. Vorrichtung nach einem der Ansprüche 1 bis 10, dadurch gekennzeichnet, daß die Deckel (5, 6) zweiteilig ausgebildet sind mit einem schwenkbaren Grundkörper und einem daran lösbar befestigten Abdeckteil (7, 8).

12. Vorrichtung nach einem der Ansprüche 1 bis 11, dadurch gekennzeichnet, daß die Profilnut (11) in einem lösbar an dem Profilhalter (3, 4) befestigten Halteteil (9, 10) ausgebildet ist.

13. Vorrichtung nach einem der Ansprüche 1 bis 12, dadurch gekennzeichnet, daß die Unterseite des Abstreifers (18) im Querschnitt genauso ausgebildet ist wie die Unterseite der Deckel (5, 6).

14. Vorrichtung insbesondere nach einem der Ansprüche 1 bis 13, dadurch gekennzeichnet, daß die die Profilhalter (3, 4) tragende Grundplatte (2) in einer Ausnehmung (26) einer Gestellplatte (27) in Richtung der Winkelhalbierenden der V-förmig angeordneten Schweißklingen (17) bezüglich der Schneideinrichtung (15) horizontal verschiebbar gelagert ist.

15. Vorrichtung nach Anspruch 14, dadurch gekennzeichnet, daß die Oberseite der Grundplatte (2) im wesentlichen bündig mit der Oberseite der Gestellplatte (27) abschließt, wobei die Grundplatte (2) zum Rand (28) hin abgestuft ausgebildet ist und der Rand (29) der Ausnehmung (26) der Gestellplatte (27) entsprechend hinterschnitten ist.

16. Vorrichtung nach Anspruch 14 oder 15, dadurch gekennzeichnet, daß am seitlichen Rand (29) der Ausnehmung (26) auf der Unterseite der Gestellplatte (27) den seitlichen Rand (28) der Grundplatte (2) untergreifende Führungsleisten (30) angebracht sind.

17. Vorrichtung nach einem der Ansprüche 14 bis 16, dadurch gekennzeichnet, daß die Grundplatte (2) mit einer auf der Unterseite der Gestellplatte (27) gelagerten, sich in Verschieberichtung (S) erstreckenden Verstellspindel (33) verbunden ist, auf der eine Rändelscheibe (34) befestigt ist, deren Außenumfang die Gestellplatte (27) nach oben durchsetzt.

18. Vorrichtung nach einem der Ansprüche 1 bis 17, dadurch gekennzeichnet, daß die Schweißeinrichtung (15) an einem höhenbeweglichen, über einen Elektromotor (48) angetriebenen Träger (44) angeordnet ist.

19. Vorrichtung nach Anspruch 18, dadurch gekennzeichnet, daß der Träger (44) in gestellfesten, vertikalen Führungen (45) gelagert ist, wobei auf der der Schweißeinrichtung (15) abgewandten Rückseite des Trägers (44) eine Zahnstange (46) befestigt ist, die mit einem Ritzel (47) eines gestellfest gelagerten Elektromotors (48) in Eingriff steht.

20. Vorrichtung insbesondere nach Anspruch 18 oder 19, dadurch gekennzeichnet, daß der Träger (44) als vertikale Trägerplatte ausgebildet ist, auf deren Vorderseite ein Winkelprofil (51) höhenverstellbar angeordnet ist, dessen einer Schenkel (50) parallel an der Vorderseite der Trägerplatte (44) anliegt und dessen anderer Schenkel (49) horizontal von der Trägerplatte (44) absteht, wobei an dem horizontalen Schenkel (49) die Schweißeinrichtung (15) befestigt ist.

21. Vorrichtung nach Anspruch 20, dadurch gekennzeichnet, daß das Winkelprofil (51) mit einer in einem auf der Vorderseite der Trägerplatte (44) befestigten Lagerbock (58) gelagerten, sich vertikal erstreckenden Verstellschrauben (59) verbunden ist, deren Schraubenkopf auf der nach oben weisenden Oberseite des Lagerbocks (58) angeordnet ist.

22. Vorrichtung nach Anspruch 20 oder 21, dadurch gekennzeichnet, daß auf der Rückseite des vertikalen Schenkels (50) des Winkelprofils (51) ein sich vertikal erstreckender Führungssteg (54) ausgebildet ist, der in einen sich vertikal erstreckenden Führungsschlitz (55) der Trägerplatte (44) eingreift.

23. Vorrichtung nach Anspruch 22, dadurch gekennzeichnet, daß in dem vertikalen Schenkel (50) des Winkelprofils (51) mit Abstand beidseitig des Führungssteges (54) sich vertikal erstreckende Langlöcher ausgebildet sind, die von in der Trägerplatte befestigten Schrauben (56) durchsetzt sind, wobei sich die Schrauben mit ihrem Schraubenkopf über einen Federring (57) auf der Vorderseite des vertikalen Schenkels (50) des Winkelprofils (51) abstützen.

24. Vorrichtung insbesondere nach einem der Ansprüche 1 bis 23, dadurch gekennzeichnet, daß einer der beiden Profilhalter (4) um eine vertikale Achse (14) schwenkbar aus der Schneidstellung in die Fügestellung überführbar ist, wobei der Profilhalter (4) drehfest mit einer sich vertikal nach unten durch die Grundplatte (2) hindurch erstreckenden Schwenkwelle (38) verbunden ist.

25. Vorrichtung nach Anspruch 24, dadurch gekennzeichnet, daß die Schwenkwelle (38) über eine Rutschkupplung (37) mit einem an der Grundplatte (2) gehaltenen Elektromotor (36) verbunden ist.

26. Vorrichtung nach Anspruch 25, dadurch gekennzeichnet, daß der Elektromotor (36) für die Schwenkwelle (38) und der Elektromotor (48) für den höhenbeweglichen Träger (44) mit einer programmierbaren Steuerschaltung (60) verbunden sind.

27. Vorrichtung nach einem der Ansprüche 1 bis 26, dadurch gekennzeichnet, daß an den Profilhaltern (3, 4) Rasten (42) angebracht sind, die im geschlossenen Zustand der Deckel (5, 6) in Gegenrasten (43) der Deckel (5, 6) eingreifen.

## Claims

1. A device for cutting and joining extruded profiles, especially sealing profiles for doors or windows, in a manner suitable for mitring, comprising a base plate (2), on which are arranged two profile holders (3, 4), each with a profile groove (11), a holding lid (5, 6) covering the latter and an inclined closing edge (12, 13), at least one of the two profile holders (3, 4) being transferrable from a cutting position, in which the profile grooves (11) of the two holders (3, 4) are substantially aligned with each other, into a joining position, in which the closing edges (12, 13) of the two profile holders (3, 4), adjoin each other, and comprising a welding apparatus (15), which has two welding blades (17) which are arranged in the form of a V with respect to each other, are each provided with a cutting edge (16) and can be moved past the closing edges (12, 13) of the profile holders (3, 4) when the latter are in the cutting position, characterized in that, when the profile holders (3, 4) are in the cutting position, a substantially triangular stripper (18) is arranged between the two welding blades (17), the side edges (19) of which strippers (18) facing the welding blades (17), together with the closing edges (12, 13) of the profile holders (3,4), form a penetration gap for the welding blades (17).

2. A device according to claim 1, in which the welding blades are guided upwards during cutting, characterised in that, when the profile holders (3, 4) are in the cutting position, the bottom of the stripper (18) is substantially in alignment with the bottom of the lid (5, 6).

3. A device according to claim 1 or claim 2, characterized in that the stripper (18) is attached to a swivel lever (22) conveying the stripper (18) out of the space formed by the closing edges (12, 13) when the profile holders (3, 4) are swivelled out of the cutting position into the joining position.

4. A device according to claims 1 to 3, characterized in that the swivel lever (22) is accomodated on one of the profile holders (3) so as to be swivellable about a swivel axis (23) perpendicular to the swivel plane of the two profile holders (3, 4), the swivel axis (23) being at a distance from the closing edge (12) of the profile holder (3).

5. A device according to claim 3 or claim 4, characterized in that one of the profile holders (4) is constructed swivellably and the other profile holder (3) is constucted to be stationary and in that the swivel lever (22) is accomodated on the stationary profile holder (3).

6. A device according to any one of claims 3 to 5, characterized in that the lids (5, 6) of the profile holders (3, 4) are hinged swivellably about a substantially horizontal axis and in that the swivel axis (23) of the swivel lever (22) is fastened to the lid (5) of one of the profile holders (3).

7. A device according to any one of claims 3 to 6, characterized in that a stop (24) for the swivel lever determining the position of the stripper (18) in the cutting position is attached to the profile holder (3).

8. A device according to any one of claims 3 to 7, characterized in that the level (22) is connected to the profile holder (3) via a spring pressing the swivel lever (22) against the stop (24).

9. A device according to any one of claims 3 to 8, characterized in that the stripper (18) is attached height-adjustably to the swivel lever (22).

10. A device according to any one of claims 3 to 9, characterized in that the stripper (18) is fastened to the swivel lever (22) with an adjusting screw (20) and is height-adjustably guided by means of a guide pin (21) attached in parallel with the adjusting screw (20).

11. A device according to any one of claims 1 to 10, characterized in that the lids (5, 6) are constructed in two parts with a swivellable basic body and a cover part (7, 8) fastened releasably thereto.

12. A device according to any one of claims 1 to 11, characterized in that the profile groove (11) is constructed in a holding part (9, 10) fastened releasably to the profile holder (3, 4).

13. A device according to any one of claims 1 to 12, characterized in that the bottom of the stripper (18) has a cross section of precisely like construction to the bottom of the lid (5, 6).

14. A device especially according to any one of claims 1 to 13, characterised in that the base plate (2) carrying the profile holders (3, 4) is accomodated in a recess (26) in a frame plate (27) horizontally displaceable with respect to the cutting apparatus (15) in the direction of the bisectors of the welding blades (17) arranged in the form of a V.

15. A device according to claim 14, characterized in that the top of the base plate (2) ends substantially flush with the top of the frame plate (27), the base plate (2) being constructed in steps towards the edge (28) and the edge (29) of the recess (26) of the frame plate (27) being correspondingly undercut.

16. A device according to claim 14 or claim 15, characterized in that guide strips (30) engaging under the lateral edge (28) of the base plate (2) are attached to the lateral edge (29) of the recess (26) on the bottom of the frame plate (27).

17. A device according to any one of claims 14 to 16, characterized in that the base plate (2) is connected with an adjusting spindle (33) extending in the direction of displacement (S) and accomodated on the bottom of the frame plate (27), on which adjusting spindle (33) there is fastened a knurled disk (34) whose outer circumference passes upwards through the frame plate (27).

18. A device according to any one of claims 1 to 17, characterized in that the welding apparatus (15) is arranged on a vertically movable carrier (44) driven by an electric motor (48).

19. A device according to claim 18, characterized in that the carrier (44) is accomodated in vertical guides (45) fixed to the frame, a rack (46) being fastened to the rear of the carrier (44) remote from the welding apparatus (15), which rack (46) is in engagement with a pinion (47) of an electric motor (48) fixed to the frame.

20. A device especially according to claim 18 or claim 19, characterized in that the carrier (44) is constructed as a vertical carrier plate, on whose front an angular profile (51) is arranged height-adjustably, one of whose legs lies in parallel against the front of the carrier plate (44) and the other of whose legs (49) stands horizontally out from the carrier plate (44), the welding apparatus (15) being fastened to the horizontal leg (49).

21. A device according to claim 20, characterized in that the angular profile (51) is connected with an adjusting screw (59) extending vertically and accomodated in a bearing block (58) fastened to the front of the carrier plate (44), the screw head of which adjusting screw (59) is arranged on the upwardly pointing top of the bearing block (58).

22. A device according to claim 20 or claim 21, characterized in that a vertically extending guide web (54) is constructed on the rear of the vertical leg (50) of the angular profile (51), said guide web (54) engaging in a vertically extending guide slit (55) in the carrier plate (44).

23. A device according to claim 22, characterized in that vertically extending elongate holes are constructed in the vertical leg (50) of the angular profile (51) at a distance each side of the guide web (54), which elongate holes have screws (56) fastened in the carrier plate passing through them, the screws being supported via a spring lock washer (57) with their heads on the front of the vertical leg (50) of the angular profile (51).

24. A device especially according to any one of claims 1 to 23, characterized in that one of the two profile holders (4) can be moved swivellably about a vertical axis (14) out of the cutting position into the joining position, the profile holder (4) being connected for rotation with a swivel shaft extending vertically downwards through the base plate (2).

25. A device according to claim 24, characterized in that the swivel shaft (38) is connected via a friction coupling (37) with an electric motor supported on the base plate (2).

26. A device according to claim 25, characterized in that the electric motor (36) for the swivel shaft (38) and the electric motor (48) for the vertically movable carrier (44) are connected with a programmable control circuit (60).

27. A device according to any one of claims 1 to 26, characterized in that retainers (42) are formed on the profile holders (3, 4), which engage in counter-retainers (43) of the lids (5, 6) when the lids (5, 6) are in the closed state.

**Revendications**

1. Dispositif pour couper en onglets et assembler des profilés, en particulier des profils d'étanchéité pour des portes ou des fenêtres, avec une plaque (2) de base sur laquelle sont disposés deux supports (3, 4) de profil, chacun avec une rainure profilée (11), un couvercle (5, 6) de maintien couvrant cette plaque, et une arête terminale (12, 13) en biais, grâce à quoi au moins un des deux supports (3, 4) de profil, à partir d'une position de coupe dans laquelle les rainures profilées (11) des deux supports (3, 4) s'alignent essentiellement l'une sur l'autre, est transférable dans une position d'assemblage, dans laquelle les arêtes terminales (12, 13) des deux supports (3, 4) de profil sont disposées bout à bout, et avec un équipement (15) de soudage qui présente deux lames (17) de soudage disposées en forme de V l'une par rapport à l'autre et munies chacune d'une arête (16) de coupe, les lames de soudage, en position de coupe des supports (3, 4) de profil, étant déplaçables le long des arêtes terminales (12, 13) des supports (3, 4) de profil, caractérisé en ce que, en position de coupe des supports (3, 4) de profil, un racloir (18) de forme essentiellement triangulaire est disposé entre les deux lames (17) de soudage, et dont les arêtes latérales (19) voisines des lames (17) de soudage forment, ensemble avec les arêtes terminales (12, 13) des supports (3, 4) de profil, une ouverture de pénétration pour les lames (17) de soudage.

2. Dispositif selon la revendication 1, dans lequel les lames de soudage lors de la coupe sont guidées de bas en haut, caractérisé en ce que le racloir (18), en position de coupe des supports (3, 4) de profil, aligne son côté inférieur essentiellement avec le côté inférieur du couvercle (5, 6).

3. Dispositif selon les revendications 1 ou 2, caractérisé en ce que le racloir (18) est disposé sur un levier articulé (22) sortant de l'intervalle formé par les arêtes terminales (12, 13), lors du pivotement des supports (3, 4) de profil à partir de la position de coupe dans la position d'assemblage.

4. Dispositif selon les revendications 1 à 3, caractérisé en ce que le levier articulé (22) est disposé de façon articulée sur l'un (3) des supports de profil, autour d'un axe (23) d'articulation perpendiculaire au plan d'articulation des deux supports (3, 4) de profil, grâce à quoi l'axe (23) d'articulation est éloigné de l'arête terminale (12) du support (3) de profil.

5. Dispositif selon les revendications 3 ou 4, caractérisé en ce que les supports de profil sont réalisés, l'un étant articulé (4) et l'autre fixe (3), et que le levier articulé (22) est disposé sur le support fixe (3) de profil.

6. Dispositif selon l'une des revendications 3 à 5, caractérisé en ce que les couvercles (5, 6) des supports (3, 4) de profil sont articulés autour d'un axe essentiellement horizontal, et que l'axe (23) d'articulation du levier articulé (22) est fixé au couvercle (5) de l'un (3) des supports de profil.

7. Dispositif selon l'une des revendications 3 à 6, caractérisé en ce que, sur le support (3) de profil, une butée (24) est disposée pour le levier articulé (22), déterminant la position du racloir (18) en position de coupe.

8. Dispositif selon l'une des revendications 3 à 7, caractérisé en ce que le levier articulé (22) est relié au support (3) de profil par l'intermédiaire d'un ressort (25) appuyant le levier articulé (22) sur la butée (24).

9. Dispositif selon l'une des revendications 3 à 8, caractérisé en ce que le racloir (18) est disposé de façon réglable en hauteur sur le levier articulé (22).

10. Dispositif selon l'une des revendications 3 à 9, caractérisé en ce que le racloir (18) est fixé avec une vis (20) de positionnement sur le levier articulé (22), et est guidé pour son réglage en hauteur au moyen d'une cheville (21) de guidage disposée parallèlement à la vis (20) de positionnement.

11. Dispositif selon l'une des revendications 1 à 10, caractérisé en ce que les couvercles (5, 6) sont formés en deux parties, avec un corps de base articulé et une partie (7, 8) de couverture fixée à ce dernier de façon démontable.

12. Dispositif selon l'une des revendications 1 à 11, caractérisé en ce que la rainure profilée (11) est formée dans une partie (9, 10) de support fixée de façon démontable au support (3, 4) de profil.

13. Dispositif selon l'une des revendications 1 à 12, caractérisé en ce que la section transversale du côté inférieur du racloir (18) est formée exactement comme le côté inférieur du couvercle (5, 6).

14. Dispositif, en particulier selon l'une des revendications 1 à 13, caractérisé en ce que la plaque (2) de base portant les supports (3, 4) de profil est logée dans un évidement (26) d'une plaque (27) de socle, de façon à pouvoir coulisser horizontalement par rapport à la direction (15) de coupe, en direction des extrémités en demi-angle des lames (17) de soudage disposées en forme de V.

15. Dispositif selon la revendication 14, caractérisé en ce que le côté supérieur de la plaque (2) de base se termine de façon essentiellement jointive avec le côté supérieur de la plaque (27) de socle, grâce à quoi la plaque (2) de base est formée en gradin au bord (28), et le bord (29) de l'évidement (26) de la plaque (27) de socle est découpé de façon correspondante vers l'arrière.

16. Dispositif selon les revendications 14 ou 15, caractérisé en ce que, sur le bord latéral (29) de l'évidement (26) sur le côté inférieur de la plaque (27) de socle, des formes (30) de guidage sont disposées, tenant par-dessous le bord latéral (28) de la plaque (2) de base.

17. Dispositif selon l'une des revendications 14 à 16, caractérisé en ce que la plaque (2) de base est reliée à un axe (33) de réglage s'étendant dans la direction (S) de coulissement et situé sur le côté inférieur de la plaque (27) de socle, et sur lequel est fixé un disque (34) de réglage, dont la périphérie extérieure traverse vers le haut la plaque (27) de socle.

18. Dispositif selon l'une des revendications 1 à 17, caractérisé en ce que l'équipement (15) de soudage est disposé sur un support (44) mobile en hauteur et entraîné par un moteur électrique (48).

19. Dispositif selon la revendication 18, caractérisé en ce que le support (44) est logé dans des guidages verticaux (45) de base fixe, grâce à quoi une crémaillère (46) est fixée sur le côté arrière du support (44) éloigné de l'équipement (15) de soudage, laquelle est en prise avec un pignon (47) d'un moteur électrique (48) installé de façon fixe.

20. Dispositif, en particulier selon la revendication 18, caractérisé en ce que le support (44) est réalisé sous la forme d'une plaque verticale de support, sur le côté avant de laquelle est disposé un profil (51) d'angle réglable en hauteur, dont une branche (50) est située parallèlement au côté avant de la plaque support (44), et dont l'autre branche (49) est distante horizontalement de la plaque support (44), grâce à quoi l'équipement (15) de soudage est fixé à la branche horizontale (49).

21. Dispositif selon la revendication 20, caractérisé en ce que le profil (51) d'angle est relié à une vis (59) de réglage s'étendant verticalement et logée dans un palier (58) fixé sur le côté avant de la plaque support (44), et dont la tête de vis est disposée sur le côté supérieur dirigé vers le haut du palier (58).

22. Dispositif selon les revendications 20 ou 21, caractérisé en ce qu'une traverse (54) de guidage s'étendant verticalement est formée sur le côté arrière de la branche verticale (50) sur le profil (51) d'angle, et s'engage dans une fente (55) de guidage s'étendant verticalement de la plaque support (44).

23. Dispositif selon la revendication 22, caractérisé en ce que des trous oblongs s'étendant verticalement sont formés dans la branche verticale (50) du profil (51) d'angle, à une certaine distance de chaque côté de la traverse (54) de guidage, lesquels sont traversés par des vis (56) fixées dans la plaque support, grâce à quoi les vis avec leurs têtes de vis s'appuient par l'intermédiaire d'un ressort spirale (57) sur le côté avant de la branche verticale (50) du profil (51) d'angle.

24. Dispositif, en particulier selon l'une des renvendications 1 à 23, caractérisé en ce que l'un (4) des deux supports de profil est transférable de façon articulée, de la position de coupe dans la position d'assemblage autour d'un are vertical (14), grâce à quoi le support (4) de profil est relié en rotation fixe à un axe (38) de rotation s'étendant verticalement vers le bas à travers la plaque (2) de base.

25. Dispositif selon la revendication 24, caractérisé en ce que l'axe (38) de rotation est relié par l'intermédiaire d'un accouplement (37) à friction à un moteur électrique (36) supporté par la plaque (2) de base.

26. Dispositif selon la revendication 25, caractérisé en ce que le moteur électrique ( 36 ) pour l'are ( 38 ) de rotation et le moteur électrique (48) pour le support (44) réglable en hauteur sont reliés avec un circuit (60) de commande programmable.

27. Dispositif selon l'une des revendications 1 à 26, caractérisé en ce que des appuis (42) sont disposés sur les supports (3, 4) de profil et qui, les couvercles (5, 6) étant fermés, sont en contact avec des contre-appuis (43) des couvercles (5, 6).

FIG. 1

FIG.2

FIG.3

EP 0 355 500 B1

FIG. 4

**FIG. 5**

EP 0 355 500 B1

FIG.6

FIG.7

EP 0 355 500 B1

FIG.8

FIG.9

FIG. 10

EP 0 355 500 B1